# EUROPEAN PATENT APPLICATION

(11) **EP 3 960 512 A1**
(43) Date of publication of application: **02.03.2022**
(21) Application number: 20198991.0
(22) Date of filing: 29.09.2020
(51) Int. Cl.: B60K 1/00, B60K 25/00

(54) **POWER SYSTEM OF AN ELECTRIC VEHICLE AND AN ELECTRIC VEHICLE**

(30) Priority: 25.08.2020 CN 202010863269
(71) Applicant: Jing-Jin Electric Technologies Co., Ltd., Beijing 100016 (CN)
(72) Inventor: SHAO, Kuizhu, Beijing, Beijing 100016 (CN)
(74) Representative: Maiwald Patent- und Rechtsanwaltsgesellschaft mbH

(57) **Abstract**

The present disclosure discloses a power system of a new-energy vehicle and the new-energy vehicle. The power system of the new-energy vehicle includes only one driving electric motor, the power system further includes a power coupling device (1) and an outputting device, and the outputting device includes a primary outputting device and a plurality of auxiliary outputting devices; the power coupling device (1) is provided between the driving electric motor and the outputting device, and is configured to realize power transmission and on-off control between the driving electric motor and the outputting device; the primary outputting device is configured to provide power for travelling of the new-energy vehicle; and the auxiliary outputting devices are configured to provide power to auxiliary driving systems of the new-energy vehicle. The above technical solutions, by using the single electric motor, realize diversified outputting for the new-energy vehicle, and, by using the coupling integration technique, reduce the power sources, save the occupied space, and reduce the vehicle weight and the manufacturing cost. The technical solutions can improve the load rate of the low-speed area of the driving electric motor, thereby improving the driving efficiency. The technical solutions can effectively simplify the control logic, improve the safety of the controlling system, and realize controlling diversity.

## Description

### TECHNICAL FIELD

The present disclosure relates to the technical field of new-energy vehicles, and particularly relates to a power system of a new-energy vehicle and the new-energy vehicle.

### BACKGROUND

The driving electric motors of conventional new-energy vehicles are merely used to drive the vehicles. In order to satisfy other demands on powers, new-energy vehicles are further provided with multiple auxiliary driving systems, which include a plurality of auxiliary electric motors, to drive devices such as a blast pump, a steering-oil pump and a power takeoff. Therefore, conventional new-energy vehicles contain a plurality of power sources, which occupy a large space and result in high equipment cost and manufacturing cost.

### SUMMARY

Aiming at the above problems, the present disclosure discloses a power system of a new-energy vehicle and the new-energy vehicle, to overcome the above problems or at least partially solve the above problems.

In order to achieve the above objects, the present disclosure employs the following technical solutions:
An aspect of the present disclosure discloses a power system of a new-energy vehicle, wherein the power system comprises only one driving electric motor, the power system further comprises a power coupling device and an outputting device, and the outputting device comprises a primary outputting device and a plurality of auxiliary outputting devices;
the power coupling device is provided between the driving electric motor and the outputting device, and is configured to realize power transmission and on-off control between the driving electric motor and the outputting device;
the primary outputting device is configured to provide power for travelling of the new-energy vehicle; and
the auxiliary outputting devices are configured to provide power to auxiliary driving systems of the new-energy vehicle.

Optionally, the power coupling device comprises a first driving member provided at an output shaft of the driving electric motor, a transmission mechanism, a second driving member provided at the primary outputting device and third driving members provided at the auxiliary outputting devices.

Optionally, the first driving member, the second driving member and the third driving members are any one selected from a group consisting of a gear, a belt pulley, a chain wheel, a worm gear and a screw, and the transmission mechanism is any one selected from a group consisting of a gear pair, a conveyor belt, a chain and a screw pair.

Optionally, the output shaft of the driving electric motor and an input shaft of the primary outputting device are coaxial.

Optionally, the primary outputting device comprises a flange plate, a spline or a gearbox.

Optionally, the input shaft of the primary outputting device is provided with an on-off controller of power transmission as needed.

Optionally, an input shaft of each of the auxiliary outputting devices is provided with an on-off controller of power transmission as needed.

Optionally, the auxiliary outputting devices and the driving electric motor are located on a same side or different sides of the power coupling device.

Optionally, the auxiliary driving systems are one or more of a blast pump, a steering-oil pump, a lubricating-oil pump, a power parking or a power takeoff.

Another aspect of the present disclosure further provides a new-energy vehicle, wherein the new-energy vehicle comprises the power system according to any one of the above options.

The advantages and advantageous effects of the present disclosure are as follows.

The above technical solutions, by using the single electric motor, realize diversified outputting for the new-energy vehicle, and, by using the coupling integration technique, reduce the power sources, save the occupied space, and reduce the vehicle weight and the manufacturing cost. The technical solutions can improve the load rate of the low-speed area of the driving electric motor, thereby improving the driving efficiency.

Further, by using clutches to control the primary outputting device and the auxiliary outputting devices, to change the control mode of the auxiliary driving systems from controlling by using an electric motor such as an inverter into controlling by using a transmission such as a clutch, the technical solutions can effectively simplify the control logic, improve the safety of the controlling system, and realize the diversity of the control modes. Furthermore, by the combined controlling of the clutches, the technical solutions satisfy special demands of special-purpose vehicles.

### BRIEF DESCRIPTION OF THE DRAWINGS

By reading the following detailed description of the preferable embodiments, various other advantages and benefits will become clear to a person skilled in the art. The drawings are merely intended to show the preferable embodiments, and are not to be considered as limiting the present disclosure. Furthermore, throughout the drawings, the same reference signs denote the same elements. In the drawings:

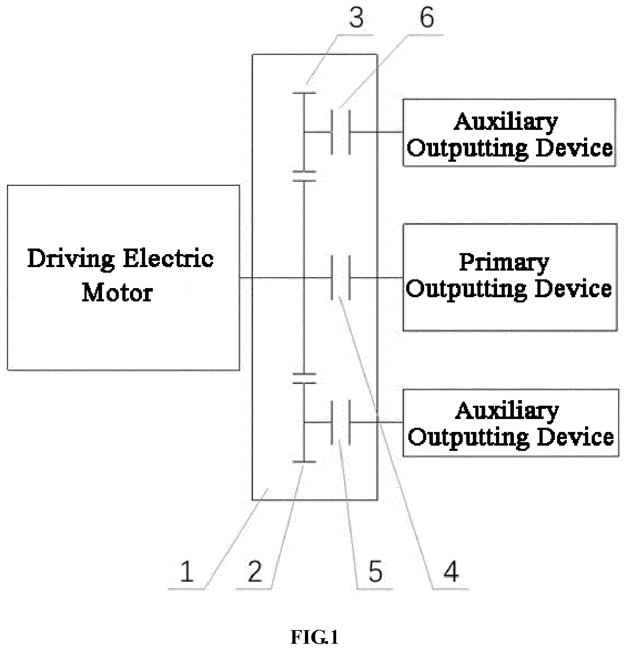

Fig. 1 is a schematic structural diagram of the power system of a new-energy vehicle according to an embodiment of the present disclosure.

In the drawings: 1 is the power coupling device, 2 is the first gear pair, 3 is the second gear pair, 4 is the first clutch, 5 is the second clutch, and 6 is the third clutch.

### DETAILED DESCRIPTION

In order to make the objects, the technical solutions and the advantages of the present disclosure clearer, the technical solutions of the present disclosure will be clearly and completely described below with reference to the particular embodiments and the corresponding drawings of the present disclosure. Apparently, the described embodiments are merely certain embodiments of the present disclosure, rather than all of the embodiments. All of the other embodiments that a person skilled in the art obtains on the basis of the embodiments in the present disclosure without paying creative work fall within the protection scope of the present disclosure.

According to an embodiment of the present disclosure, a power system of a new-energy vehicle is disclosed. The power system comprises only one driving electric motor, and the driving electric motor may serve as both of the speed reducer of the travelling of the vehicle and the power source of auxiliary driving systems, and is connected to the components of other power systems via a power coupling device.

The power system further comprises the power coupling device and an outputting device, and the outputting device comprises a primary outputting device and a plurality of auxiliary outputting devices. The power coupling device is provided between the driving electric motor and the outputting device, and is configured to realize power on-off control between the driving electric motor and the outputting device.

The primary outputting device comprises a flange plate, a spline or a gearbox, and may further comprise the input shaft of a vehicle speed reducer. The primary outputting device is connected to the output shaft of the driving electric motor via the transmission mechanism or a shaft coupling, thereby providing power for the travelling of the new-energy vehicle.

Similarly, the auxiliary outputting devices may be transmission connecting components such as a flange plate, a spline or a transmission shaft, and is configured to provide power to auxiliary driving systems of the new-energy vehicle. The auxiliary driving systems comprise a blast pump, a steering-oil pump, a lubricating-oil pump, a power parking or a power takeoff. Certainly, the auxiliary driving systems are not limited thereto, and according to the diversified demands of vehicles, all of the auxiliary driving systems that can be driven by rotation movement or movements obtained by conversion from rotation movement are encompassed within the protection scope of the present embodiment.

In order to realize the on-off control on the outputting devices, preferably, an on-off controller of power transmission may be provided at the outputting device. The on-off controller is preferably a clutch, thereby communicating the power outputs of the driving electric motor and the outputting device according to the demands. Certainly, the clutch may be omitted, or another component is used to control the outputting of the power. For example, when the primary outputting device is a gearbox, the clutch may be optionally employed, and if the clutch is not provided the neutral position of the gearbox is utilized as the power-transmission controller.

The relation between the position of the outputting device and the position of the driving electric motor is not particularly limited, and may be flexibly configured according to the demands. For example, relative to the power coupling device, the outputting device may be provided on the same side as that of the driving electric motor, and may also be provided on another side of the power coupling device.

In an embodiment, the power coupling device comprises a first driving member provided at the output shaft of the driving electric motor, a transmission mechanism, a second driving member provided at the primary outputting device and third driving members provided at the auxiliary outputting devices, thereby integrating those components together via the power coupling device, to realize diversified outputting of the driving electric motor, whereby the power of the driving electric motor is outputted to the auxiliary driving systems via the driving members and the transmission mechanism.

The first driving member, the second driving member and the third driving members are any one selected from a group consisting of a gear, a belt pulley, a chain wheel, a worm gear and a screw. The selection of each of the driving members should satisfy the practical situation of the power transmission, to enable them to cooperate to complete the transmission coupling. Correspondingly, the transmission mechanism may be a gear pair, a conveyor belt, a chain, a screw pair or the like, and the quantities of the gear pairs, conveyor belts, chains or screw pairs may be set according to the demands. The output shaft of the driving electric motor may be provided with various driving members, for individually realizing the power transmission of the auxiliary outputting devices. In addition, besides the above-described transmission mechanisms, other means that can realize power transmission are also within the protection scope of the present embodiment.

Optionally, the output shaft of the driving electric motor and the input shaft of the primary outputting device are coaxial, thereby improving the transmission efficiency of the primary power, and facilitating the structural layout.

Fig. 1 shows a structural diagram of the power system of a preferable embodiment. The power system according to the present embodiment comprises a power coupling device 1. The driving electric motor is provided with a gear as the first driving member, and the second driving member and the third driving members are also a gear. Those driving members form at least two gear pairs: the first gear pair 2 and the second gear pair 3, thereby forming a gear drive mechanism, and the speed ratios of the gear pairs may be set according to the demands. Furthermore, a first clutch 4, a second clutch 5 and a third clutch 6 are respectively provided on the input shafts of the three outputting devices shown in Fig. 1, and are used to control the power on-off of the primary outputting device and the auxiliary outputting devices.

The first clutch 4 mainly satisfies the requirements on the power output of the auxiliary driving systems in the parking state. The second clutch 5 and the third clutch 6 mainly serve to cut off the loads of the auxiliary driving systems, and, when the auxiliary driving systems of the vehicle does not need energy, cut off the energy in time, which can improve the efficiency of the power system and, when a problem in safety happens, cut off in time the power output.

The second clutch 5 and/or the third clutch 6 may be optionally employed according to the characteristics of the auxiliary driving systems to be driven. When the auxiliary driving systems are required to operate synchronously with the driving electric motor, those clutches may be omitted. Certainly, other controlling modes may be used to realize the on-off control.

In another embodiment of the present disclosure, a new-energy vehicle is provided, and the new-energy vehicle comprises the power system according to the above the embodiment, which is not discussed here further.

The above are merely embodiments of the present disclosure, and are not limiting the protection scope of the present disclosure. Any modifications, equivalent substitutions, improvements and extensions that are made within the spirit and principle of the present disclosure should fall within the protection scope of the present disclosure.

## Claims

1. A power system of a new-energy vehicle, **characterized in that**: the power system comprises only one driving electric motor, the power system further comprises a power coupling device (1) and an outputting device, and the outputting device comprises a primary outputting device and a plurality of auxiliary outputting devices;
the power coupling device (1) is provided between the driving electric motor and the outputting device, and is configured to realize power transmission and on-off control between the driving electric motor and the outputting device;
the primary outputting device is configured to provide power for travelling of the new-energy vehicle; and
the auxiliary outputting devices are configured to provide power to auxiliary driving systems of the new-energy vehicle.

2. The power system according to claim 1, **characterized in that**: the power coupling device (1) comprises a first driving member provided at an output shaft of the driving electric motor, a transmission mechanism, a second driving member provided at the primary outputting device and third driving members provided at the auxiliary outputting devices.

3. The power system according to claim 2, **characterized in that**: the first driving member, the second driving member and the third driving members are any one selected from a group consisting of a gear, a belt pulley, a chain wheel, a worm gear and a screw, and the transmission mechanism is any one selected from a group consisting of a gear pair, a conveyor belt, a chain and a screw pair.

4. The power system according to claim 1, **characterized in that**: the output shaft of the driving electric motor and an input shaft of the primary outputting device are coaxial.

5. The power system according to claim 1, **characterized in that**: the primary outputting device comprises a flange plate, a spline or a gearbox.

6. The power system according to any one of claims 1-5, **characterized in that**: the input shaft of the primary outputting device is provided with an on-off controller of power transmission.

7. The power system according to any one of claims 1-5, **characterized in that**: an input shaft of each of the auxiliary outputting devices is provided with an on-off controller of power transmission.

8. The power system according to any one of claims 1-5, **characterized in that**: the auxiliary outputting devices and the driving electric motor are located on a same side or different sides of the power coupling device (1).

9. The power system according to any one of claims 1-5, **characterized in that**: the auxiliary driving systems are one or more of a blast pump, a steering-oil pump, a lubricating-oil pump, a power parking and a power takeoff.

10. A new-energy vehicle, **characterized in that**: the new-energy vehicle comprises the power system according to any one of claims 1-9.
